# EUROPÄISCHE PATENTSCHRIFT

(11) **EP 2 965 070 B1**
(45) Veröffentlichungstag und Bekanntmachung des Hinweises auf die Patenterteilung: **18.12.2019**
(21) Anmeldenummer: 14722082.6
(22) Anmeldetag: 04.03.2014
(51) Int. Cl.: G01N 25/48

(54) **VERFAHREN UND VORRICHTUNG ZUR MATERIALANALYSE**
METHOD AND DEVICE FOR MATERIAL ANALYSIS
PROCÉDÉ ET DISPOSITIF D'ANALYSE DE MATÉRIAUX

(30) Priorität: 04.03.2013 DE 102013102088
(43) Veröffentlichungstag der Anmeldung: 13.01.2016
(73) Patentinhaber: Netzsch Gerätebau GmbH, 95100 Selb (DE); Denner, Thomas, 95100 Selb (DE); Blumm, Jürgen, 95100 Selb (DE); Schaefer, Otto Max, 95100 Selb (DE); Hollering, Markus, 95632 Wunsiedel (DE); Gradl, Mathias, 96145 Seßlach (DE); Herr, Gunther, 96253 Haarth (DE); Nijmeh, André, 96117 Merkendorf (DE); Hilpert, Thilo, 95100 Selb (DE); Frenzl, Alexander, 95173 Schönwald (DE); Lauterbach, Stefan, 95100 Selb (DE); Strobel, Andreas, 08209 Auerbach (DE); Kaiser, Gabriele, 95100 Selb (DE); Schmoelzer, Stefan, 95188 Issigau (DE); Meyer, Markus, 86678 Ehingen (DE); Knappe, Stephan, 95182 Döhlau (DE); Preuss, Rolf, 37574 Einbeck (DE); Gebhardt, Michael, 95100 Selb (DE); Moukhina, Elena, 95100 Selb (DE); Schindler, Alexander, 95191 Leupoldsgrün (DE)
(72) Erfinder: DENNER, Thomas, 95100 Selb (DE); BLUMM, Jürgen, 95100 Selb (DE); SCHAEFER, Otto, Max, 95100 Selb (DE); HOLLERING, Markus, 95632 Wunsiedel (DE); GRADL, Mathias, 96145 Sesslach (DE); HERR, Gunther, 96253 Haarth (DE); NIJMEH, André, 96117 Merkendorf (DE); HILPERT, Thilo, 95100 Selb (DE); FRENZL, Alexander, 95173 Schönwald (DE); LAUTERBACH, Stefan, 95100 Selb (DE); STROBEL, Andreas, 08209 Auerbach (DE); KAISER, Gabriele, 95100 Selb (DE); SCHMOELZER, Stefan, 95188 Issigau (DE); MEYER, Markus, 86678 Ehingen (DE); KNAPPE, Stephan, 95182 Döhlau (DE); PREUSS, Rolf, 37574 Einbeck (DE); GEBHARDT, Michael, 95100 Selb (DE); MOUKHINA, Elena, 95100 Selb (DE); SCHINDLER, Alexander, 95191 Leupoldsgrün (DE)
(86) Internationale Anmeldenummer: PCT/DE2014/000105
(87) Internationale Veröffentlichungsnummer: WO 2014/135150

(56) Entgegenhaltungen:
- EP-A1- 1 528 392
- DD-A1- 201 516
- DE-A1- 3 004 810
- DE-B- 1 178 235
- FR-A1- 2 929 012
- US-A- 3 491 581
- US-A- 5 321 719

## Beschreibung

Die Erfindung betrifft ein Verfahren und eine Thermoanalysevorrichtung aufweisend eine Haltevorrichtung mit einer Auflagefläche für einen Probenhalter und mindestens ein Temperaturerfassungsmittel, das dem Probenhalter zugeordnet ist. Weiter betrifft die Erfindung einen Probenhalter sowie ein Herstellungsverfahren für ein Temperaturerfassungsmittel für eine Thermoanalysevorrichtung.

Ein thermisches Verfahren zur Materialanalyse ist beispielsweise die Differenz-Thermoanalyse (DTA) aus der Gruppe der Methoden der thermischen Analyse. Die DTA beruht auf einem charakteristischen Energieumsatz beim Phasenübergang und ermöglicht die qualitative Analyse. Es werden Temperaturen der Probe und einer ausgewählten Referenzsubstanz jeweils in einem Tiegel in einer symmetrischen Messkammer gemessen und verglichen. Die Referenzsubstanz ist so gewählt, dass sie im zu untersuchenden Temperaturbereich keine Phasenübergänge aufweist. Es erfolgt eine konstante Energiezufuhr durch einen Ofen. Über Temperaturfühler werden die Temperaturen unter beiden Tiegeln gemessen und die auftretende Differenz aufgezeichnet. Nur bei Phasenübergängen tritt eine solche Temperaturdifferenz auf, aus deren Kurvenverlauf sich dann Rückschlüsse auf die Zusammensetzung der Probe ziehen lassen. Häufige Anwendungsgebiete der DTA sind die Untersuchung mineralischer Stoffe, wie zum Beispiel die Klinkerphasenbildung in Zementrohmehlen, die Erfassung der Reaktionswärme bei der Verbrennung von organischen Stoffen sowie die Charakterisierung von Kunststoffen.

Aus der DTA wurde die dynamische Differenzkalorimetrie (engl. Differential Scanning Calorimetry, DSC) weiterentwickelt.

Statt wie bei der DTA die Temperaturdifferenz zwischen beiden Tiegeln als Funktion der zugeführten Energie bzw. der Temperatur der Referenzsubstanz direkt aufzuzeichnen, wird bei der DSC daraus der Wärmestromunterschied ermittelt. Dynamische Differenzkalorimeter (DDK, engl. Dynamic Differential Scanning Calorimeter, DDSC) werden für die Analyse von Polymeren, pharmazeutischen Werkstoffen, Textilien, Metallen, Keramiken und anderen organischen und anorganischen Materialien verwendet. Aus den Messgrößen können diverse Materialeigenschaften wie Phasenumwandlungstemperaturen, spezifische Wärmen, Schmelz- und Erstarrungstemperaturen, etc. abgeleitet werden. Die Methode der dynamischen Differenzkalorimetrie ist weltweit etabliert und standardisiert (ISO 11357, DIN 53765, ASTM E 967, ASTM 968 oder ASTM D 3418). Man unterscheidet dabei die leistungskompensierende DSC und die Wärmestrom-DSC.

Typischerweise werden bei diesen Messgeräten zwei keramische oder metallische Tiegel zur Aufnahme einer Probe und einer Referenz verwendet. Bei einer leistungskompensierenden DSC werden die beiden Tiegel getrennt in zwei kleine Öfen eingesetzt, die häufig mit einer Widerstandsheizung wie beispielsweise einer Platinheizwicklung ausgestattet sind. Daneben gibt es verschiedene Möglichkeiten der Kühlung wie zum Beispiel Flüssigstickstoffkühlung, Druckluftkühlung, mechanische Kühlungen und dergleichen mehr. Beide Tiegel werden demselben Temperaturprogramm unterzogen. Gemessen wird der Unterschied in der elektrischen Leistung, die benötigt wird, um einen Temperaturunterschied zwischen beiden Tiegeln konstant, typischerweise bei null zu halten. Als Temperaturmesseinrichtungen werden heute in der Praxis zumeist PT100 Widerstandsthermometer, angeschweißte Thermoelemente oder Thermosäulen eingesetzt.

Bei den Wärmestrom-DSCs dagegen gibt es nur einen Ofen, der meist mit Hilfe von Widerstandsheizern wie z.B. Mantelheizleitern erhitzt wird. Für die Kühlung stehen dieselben Methoden zur Verfügung wie für die leistungskompensierende. Im Ofen ist ein Sensor mit zwei Auflageflächen bzw. definierten Positionen für Probe und Referenz eingebaut. Die Auflageflächen können z.B. in eine Scheibe integriert sein oder sich auf einer zylindrischen Erhöhung befinden. Sie sind mit Temperaturmesseinrichtungen (PT100 Widerstandsthermometer, Thermoelemente oder Thermosäulen) kontaktiert und während der Messungen jeweils mit einem entsprechenden Tiegel bestückt. Mit den Temperaturmesseinrichtungen wird direkt der Wärmestromunterschied oder der Temperaturunterschied zwischen den beiden Positionen gemessen.

Der Temperaturunterschied kann in einen Wärmestromunterschied umgerechnet werden, wenn das DSC-Gerät einer Kalibrierung unterzogen wurde. Dies kann mit Referenzmaterialien erfolgen, deren relevante thermische Eigenschaften (z.B. Temperatur-Onset und Enthalpie von Phasenübergängen, spezifische Wärmekapazität in Abhängigkeit von der Temperatur) genau bekannt sind. Ein sehr wichtiges Referenzmaterial der DSC ist Indium.

Die Genauigkeit der Messung des Wärmestroms hängt davon ab, wie gut sich das Messsignal reproduzieren lässt, wenn der tatsächliche Wärmestrom einer Probe derselbe ist. Eine wesentliche Voraussetzung für gute Reproduzierbarkeit ist, dass der thermische Gesamtwiderstand entlang des Wärmestrompfades zwischen Probe und Referenz bei aufeinanderfolgenden Messungen möglichst gleich bleibt. Der thermische Gesamtwiderstand ergibt sich aus der Summe der Einzelwiderstände entlang des Wärmestrompfades. Diese werden im Wesentlichen durch die Wärmeleitfähigkeiten der verwendeten Materialien, die Geometrie der Bauteile sowie die Kontaktwiderstände an Grenzflächen (z.B. Tiegel/Sensor) bestimmt.

Nicht außer Acht gelassen werden dürfen jedoch auch Wärmeströme, die über Wärmeleitung durch das umgebende Gas, Konvektion und Strahlung zustande kommen. Bezüglich der Wärmeleitung durch das umgebende Gas kann dies bei der Wärmestrom-DSC durch Messungen des Schmelzvorgangs von Indium in unterschiedlichen Gasatmosphären nachgewiesen werden. Misst man die Schmelze von Indium einmal unter Helium und nachfolgend dieselbe Probe unter denselben Messbedingungen unter Argon, so ist das Integral des Schmelzpeaks in der Temperaturdifferenzkurve für die Messung unter Argon größer als unter Helium. Der Grund hierfür ist die deutlich niedrigere Wärmeleitfähigkeit von Argon im Vergleich zu Helium. Bei der Messung unter Helium fließt also ein größerer Teil des Wärmestroms zwischen Indium-Probe und Referenz über das Gas als unter Argon. Dieser Anteil des Wärmestroms wird aber von den Temperaturmesseinrichtungen praktisch nicht erfasst und somit ergibt die von den Temperaturmesseinrichtungen gemessene Temperaturdifferenz im Fall von Helium ein kleineres Integral. In der Praxis wird dieses Phänomen durch gasartabhängige Kalibrierungen berücksichtigt.

Für die Messungen werden je nach Anwendung und deren spezieller Anforderung Tiegel unterschiedlicher Form aus unterschiedlichen Materialien verwendet. Dabei sollte die Masse der Tiegel möglichst gering, die Wärmeleitung gut und für den industriellen Gebrauch der Preis möglichst niedrig sein. Ein häufig verwendetes Material ist folglich Aluminium. Die Wand- und Bodenstärken der Tiegel liegt im Bereich weniger zehntel Millimeter, das Füllvolumen zwischen wenigen zehn und wenigen hundert Mikrolitern. Damit der thermische Widerstand erhalten bleibt und somit die Genauigkeit der Wärmestrommessung nicht beeinträchtigt wird, dürfen die tatsächlichen Berührflächen zwischen Tiegelboden und Auflagefläche für unterschiedliche Tiegel nicht variieren. Problematisch ist hier vor allem, dass die Tiegelböden aufgrund der geringen Materialstärke unkontrolliert und nicht-reproduzierbar von einer ideal ebenen Form abweichen können. Das kann durch die Fertigung bedingt sein aber auch durch Verformung während der Handhabung. Besonders nachteilig macht sich eine Wölbung des Tiegelbodens nach außen bemerkbar.

Die einzelnen Bauteile des Sensors, also vor allem Auflageflächen und Temperaturmesseinrichtungen, sind fest miteinander verbunden, so dass sich der Widerstand für den Wärmestrom in diesem Bereich über eine Vielzahl von Messungen nicht oder nur vernachlässigbar ändert. Messbare Veränderungen können durch eine Rekalibrierung ausgeglichen werden. Kritischer sind dagegen der thermische Kontakt zwischen Probe und Tiegel sowie zwischen Tiegel und Sensor, weil an diesen Stellen aus praktischen Gründen der Handhabbarkeit meist eine leichte Trennbarkeit gewünscht ist.

Aufgrund der Vielzahl von unterschiedlichen Probenformen muss der thermische Kontakt zwischen Probe und Tiegel ggf. für jede individuelle Probe angepasst werden. Hierzu gibt es entsprechende Literatur, die auf verschiedene Probenpräparationsmöglichkeiten eingeht (z.B. Achim Frick, Claudia Stern: DSC-Prüfung in der Anwendung. München und Wien: Carl Hanser Verlag, 2006).

Das US 7,470,057 Patent und die Patentanmeldung DE 11 2007 001 888 offenbaren einen Sensor, bei dem die Auflageflächen für Probe bzw. Referenz auf der Oberseite einer Proben- bzw. Referenz-Plattform liegen. Proben- bzw. Referenz-Plattform sind mit einem zylindrischen dünnwandigen Element für die Probe bzw. mit einem zylindrischen dünnwandigen Element für die Referenz unter Verwendung von Diffusionsschweißen verbunden. Dabei bestehen die Plattformen für Probe und Referenz aus der einen Legierung eines Thermoelementpaares (Legierung A) und die jeweils zugehörigen zylindrischen dünnwandigen Elemente aus der anderen Legierung dieses Thermoelementpaares (Legierung B). Eine Basis, die aus derselben Legierung B wie die zylindrischen dünnwandigen Elemente besteht, verbindet diese miteinander. Über zwei Drähte aus Legierung A, die an den Unterseiten der Proben- bzw. Referenz-Plattform befestigt sind, kann eine Temperaturdifferenz gemessen werden. Es handelt sich dabei um die Differenz zwischen der mittleren Temperatur an der Grenzfläche zwischen der Plattform und dem zylindrischen dünnwandigen Element auf der Referenzseite und der mittleren Temperatur an der Grenzfläche zwischen der Plattform und dem zylindrischen dünnwandigen Element auf der Probenseite. Diese Grenzflächen liegen außerhalb der Kontaktflächen zwischen Tiegel und Plattform. Dadurch soll sichergestellt werden, dass die gemessenen Temperaturdifferenzen unabhängig von Variationen des Kontaktwiderstandes bleiben, weil nach den Ausführungen des Anmelders die gesamte Wärme über diese Grenzflächen fließen muss.

Unberücksichtigt bleibt hier, dass bei erhöhtem Kontaktwiderstand zwischen Tiegel und Sensor die Wärmestromanteile über Strahlung, Wärmeleitung im umgebenden Gas und Konvektion relativ anwachsen. Daraus folgt, dass die Wärme dann nicht mehr im selben Maß über die Grenzfläche, die ja einen gewissen Abstand vom Tiegel hat, fließt, und sich schließlich eine geringere gemessene Temperaturdifferenz, d.h. ein schwächeres Messsignal aufbaut.

Ein Verfahren zur Messung des Wärmebedarfs fester Stoffe ist in der Patentschrift DD 201 516 A1 offenbart. Dabei wird ein Tiegel in einer Einwurfvorrichtung, über einen auf eine konstante Temperatur eingestellten Ofen, auf eine bestimmte Temperatur gebracht. Anschließend fällt der Tiegel auf ein Thermoelement, das durch einen Keramikstab mit entsprechender Führung für den Tiegel gehaltert wird. Dazu ist der Tiegelboden mit einer Vertiefung für den Keramikstab versehen, was zu einer Reproduzierbarkeit der Führung des Tiegels führen soll. Der Tiegel sitzt auf einer Auflagefläche des Keramikstabes auf.

Aus der US 6 318 890 B1 ist eine Thermoanalysevorrichtung bekannt, welche eine mit einer Öffnung versehenen Haltevorrichtung für einen Probenhalter aufweist. Der als Tiegel ausgebildete Probenhalter ist am Tiegelboden mit einem Zentrierzapfen versehen. Öffnung und Zentrierzapfen dienen dabei als Positionierhilfe um den Tiegel in der Haltevorrichtung anzuordnen. Das Messprinzip des Sensors der Haltevorrichtung beruht auf einen inneren und einen äußeren Kreis von Kontaktstellen, wobei der Abstand der Probe zu dem als Probenthermoelement dienenden inneren Kreis möglichst klein und zu dem als Referenzthermoelement dienenden äußeren Kreis möglichst groß sein sollte. Um einen thermischen Widerstand zwischen den Thermoelementen vorteilhaft zu erhöhen, ist die Haltevorrichtung mit einer als Auflagefläche dienenden flächenhaften Erhebung versehen.

Damit der thermische Widerstand erhalten bleibt und somit die Genauigkeit der Wärmestrommessung nicht beeinträchtigt wird, dürfen die tatsächlichen Berührflächen zwischen Tiegelboden und Auflagefläche für unterschiedliche Tiegel nicht variieren. Problematisch ist hier vor allem, dass die Tiegelböden aufgrund der geringen Materialstärke unkontrolliert und nicht-reproduzierbar von einer ideal ebenen Form abweichen können. Das kann durch die Fertigung bedingt sein aber auch durch Verformung während der Handhabung. Besonders nachteilig auf die Reproduzierbarkeit der Messergebnisse macht sich eine Wölbung des Tiegelbodens nach außen bemerkbar.

Weitere artverwandte Thermoanalysevorrichtungen und Messverfahren sind aus den Dokumenten FR2929012 und US 3491581 bekannt.

Der Erfindung liegt damit die Aufgabe zugrunde, ein Verfahren und eine Vorrichtung zur thermischen Materialanalyse sowie einen Probenhalter bereit zu stellen, mit dem die Reproduzierbarkeit von thermoanalytischen Messungen verbessert werden kann. Weiterhin ist es Aufgabe der Erfindung ein besonders effektives Herstellungsverfahren für eine Haltevorrichtung einer Thermoanalysevorrichtung anzugeben.

Die Aufgabe wird erfindungsgemäß durch eine Thermoanalysevorrichtung entsprechend dem unabhängigen Anspruch 1, ein thermoanalytisches Messverfahren entsprechend dem unabhängigen Anspruch 10 und ein Herstellungsverfahren für ein als Thermoelement ausgebildetes Temperaturerfassungsmittel entsprechend dem unabhängigen Anspruch 12 gelöst. Dabei wird erfindungsgemäß die Auflagefläche einer Haltevorrichtung und/oder ein Probenhalter Berührungspunkte bildende Erhebungen oder Vertiefungen aufweisen, die eine der Auflagefläche zugeordnete relevante Wärmestromzone definieren, wobei ein Temperaturerfassungsbereich des Temperaturerfassungsmittels innerhalb der relevanten Wärmestromzone angeordnet ist.

Die Erfindung geht dabei von der Überlegung aus, dass durch eine geeignet gewählte Ausgestaltung des Probenhalters und/oder Form der Auflagefläche ein für das Messergebnis und die Reproduzierbarkeit relevanter thermischer Widerstand zwischen dem Probenhalter und dem Sensor von Messung zu Messung auch bei Toleranzunterschieden zwischen den Probenhaltern weitgehend konstant gehalten werden kann. Die Fertigungsgenauigkeit der Probenhalter könnte so bei gleicher oder verbesserter Messgenauigkeit vergleichsweise gering sein, wodurch sich beispielsweise die Fertigungskosten reduzieren ließen. Der Probenhalter und die Temperaturmesseinrichtungen des Sensors könnten so gestaltet werden, dass ohne spezielle Vorkehrungen des Anwenders der thermische Widerstand zwischen Tiegel und Temperaturerfassungsmittel von Messung zu Messung weitgehend derselbe ist. Bei sonst gleichen Randbedingungen wie Temperaturführung und Gasatmosphäre könnte davon ausgegangen werden, dass sich der Anteil, der dem Wärmestrom, der Konvektion und der Strahlung zuzuordnen ist, nicht ändert.

Die Erhebungen oder Vertiefungen befinden sich kontaktseitig an definierten Stellen am Probenhalter und/oder der Auflagefläche, wodurch die Wärmeleitung im Wesentlichen nur über die Kontaktstellen zwischen Probenhalter und Auflagefläche erfolgt. Als Berührungspunkte oder Kontaktstellen im Sinne der Erfindung sind sowohl punktförmige als auch flächige Kontaktstellen zu verstehen. Der Bereich zwischen den Berührungspunkten beziehungsweise Kontaktstellen und dem Temperaturerfassungsmittel wird als relevante Wärmestromzone bezeichnet. Die Anordnung des Temperaturerfassungsmittels und des Probenhalters erfolgt dabei derart, dass die relevante Wärmestromzone von Messung zu Messung konstant bleibt, indem das Temperaturerfassungsmittel innerhalb der relevanten Wärmestromzone angeordnet ist. Dadurch wird erreicht, dass der durch das Temperaturerfassungsmittel ermittelte Wärmestrom bei mehreren Messvorgängen im Mittel weitgehend konstant bleibt.

Vorzugsweise weist das Temperaturerfassungsmittel eine zu den Erhebungen oder Vertiefungen korrespondierende Kontaktform auf. Weiter kann es vorteilhaft sein, wenn der Temperaturerfassungsbereich im Wesentlichen zentrisch zur Auflagefläche verläuft. Die Reproduzierbarkeit kann dadurch weiter verbessert werden, da die Wärmeleitstrecken von den Kontaktstellen hin zum Temperaturerfassungsbereich so nur unerheblich voneinander abweichen.

Bevorzugt liegen die durch die Erhebungen oder Vertiefungen gebildeten Berührungs- beziehungsweise Kontaktpunkte in einem Randbereich der Auflagefläche, was zu einer stabilen Anordnung des Probenhalters auf der Auflagenfläche beiträgt.

Für die Messungen werden je nach Anwendung und deren spezieller Anforderung Probenhalter mit unterschiedlicher Form und aus unterschiedlichen Materialien verwendet. Besonders bevorzugt ist der Probenhalter als Tiegel ausgebildet. Dabei sollte die Masse des Tiegels möglichst gering, die Wärmeleitung gut und für den industriellen Gebrauch der Preis möglichst niedrig sein. Es wird vorgeschlagen, vorzugsweise einen Tiegel aus Aluminium zu verwenden. Die Wand- und Bodenstärken der Tiegel liegt dabei gewöhnlich im Bereich weniger zehntel Millimeter, das Füllvolumen zwischen wenigen zehn und wenigen hundert Mikrolitern. Bei herkömmlichen Tiegeln für die Thermoanalyse weichen die Tiegelböden fertigungsbedingt und aufgrund von Verformungen durch mechanische Einwirkungen, wie sie beim Transport und der Handhabung auftreten können, voneinander ab. Ohne die erfindungsgemäß definierten Kontaktstellen haben diese Abweichungen einen nicht vernachlässigbaren Messfehler zur Folge.

Als besonders vorteilhaft hat es sich herausgestellt, wenn zwischen dem Tiegelboden und der Auflagefläche ein Hohlraum ausgebildet ist. Erreicht werden kann das beispielsweise dadurch, dass der Tiegelboden und/oder die Auflagefläche eine Vertiefung in Form einer Wölbung aufweist. Durch eine unterschiedliche Form der Wölbung können so im Querschnitt Hohlräume in Form einer konvexen oder konkaven Linse aber auch Hohlräume in Menisken-Form gebildet werden. Vorzugsweise weist der Tiegelboden und/oder die Auflagefläche eine im Querschnitt bildenden Hohlraum in Form einer bi- oder plankonvexen Linse auf. Besonders bevorzugt ist jedoch eine Wölbung mit einem sinusförmigen Querschnitt.

Erfindungsgemäß ist die Auflagefläche selbst als Sensor ausgebildet. Das kann dadurch erreicht werden, dass die Haltevorrichtung als ein eine Messspannung erzeugendes Thermoelement ausgestaltet ist, wobei eine Grenzfläche zweier Metallelemente A,B den Temperaturmessbereich bildet. Je nach Ausgestaltung kann der Temperaturmessbereich eine unterschiedliche Dimension und Form aufweisen. Beispielsweise kann das erste Metallelement A von einem zweiten Metallelement B umschlossen sein, wodurch eine geschlossene Kontaktform entsteht und unter Berücksichtigung der Kontaktfläche/Grenzfläche der Temperaturmessbereich definiert wird.

Als besonders vorteilhaft hat sich eine zylinderförmige Haltevorrichtung erwiesen, bei der ein erstes Metallelement A einen kreisrunden Querschnitt aufweist und von einem zweiten zylinderförmigen Metallelement B ummantelt ist. Beide Metallelemente bilden zusammen das Thermoelement, wobei der Temperaturmessbereich kreisförmig verläuft. Eine derartige Haltevorrichtung wird im Vergleich zu anderen Ausführungsformen als einfach und kostengünstig herzustellen angesehen. Insbesondere bei einem Tiegel als Probehalter weist dadurch der Temperaturmessbereich einen zum Probenhalter vorteilhaften korrespondierenden Verlauf auf.

Vorzugsweise weist der Tiegel für die erfindungsgemäße Vorrichtung einen Tiegelboden mit einer zum Tiegel hin gerichteten Wölbung auf. Der so gebildete Hohlraum zwischen dem Tiegelboden und der Auflagefläche der Haltevorrichtung hat somit im Querschnitt, bei einer ebenen Auflagefläche, eine plankonvexe Form. Bevorzugt schließt der Rand der Wölbung in etwa mit dem äußeren Rand des Tiegelbodens ab, wodurch eine umfänglich verlaufende Kante entsteht, welche eine Art Standfuß für den Tiegel und somit auch die erfindungsgemäße Berührungs- beziehungsweise Kontaktfläche bildet. Dadurch ist gleichzeitig auch gewährleistet, dass der Tiegel stabil und sicher auf der Auflagefläche der Haltevorrichtung aufliegt. Denkbar ist aber auch, dass beispielsweise der Tiegel punktförmige Erhebungen aufweist, wobei für einen stabilen Stand drei derartige Erhebungen als ausreichend angesehen werden.

Grundsätzlich sollten eine Mehrzahl von Erhebungen oder Vertiefungen einheitlich dimensioniert und vorzugsweise homogen über den Tiegelboden und/oder der Auflagefläche verteilt angeordnet sein.

Unter Verwendung der erfindungsgemäßen thermoanalytischen Messvorrichtung wird erstmals ein Messverfahren ermöglicht, bei dem der thermische Widerstand entlang eines Wärmestrompfades zwischen Probe und Referenz bei aufeinanderfolgenden Messungen weitgehend gleich bleibt, indem der zu erfassende Wärmestrom im Wesentlichen über definierte Berührungspunkte beziehungsweise Kontaktstellen zwischen Auflagefläche und Probenhalter zum Temperaturerfassungsmittel geleitet wird. Als vorteilhaft angesehen werden kann, dass sich der thermische Widerstand zwischen Probe und Referenz insbesondere auch dann nicht wesentlich ändert, wenn die Position der Probe im Tiegel und die Position des Tiegels auf dem Probenhalter jeweils bis zu einem gewissen Grad, je nach Ausführungsform in der Größenordnung von einigen zehntel Millimetern, von einer ideal mittigen Position abweichen.

Das für die erfindungsgemäße Vorrichtung und Verfahren vorzugsweise verwendete Thermoelement als Temperaturerfassungsmittel umfasst mindestens zwei Elemente aus unterschiedlichen Metallen, wobei ein erstes metallisches Element A, mit einem gegenüber einem zweiten metallischen Element B größeren Ausdehnungskoeffizienten, passgenau in das als Hohlprofil ausgebildete zweite metallische Element B eingebracht wird und beide Elemente A,B in einem ersten Arbeitsgang erwärmt und anschließend in einem zweiten Arbeitsgang wieder abgekühlt werden. Dadurch wird erreicht, dass die beiden Elemente A,B aufgrund unterschiedlicher Ausdehnungskoeffizienten unter hohem Druck miteinander verschweißt werden (Diffusionsschweißen). Beim Erwärmen dehnt sich das Element A stärker als das Element B aus, wodurch sich beide Elemente unter dem Einfluss von Wärme und Druck unlösbar miteinander verbinden. Die Erwärmungstemperatur liegt dabei vorzugsweise nahe der Solidustemperatur des niedriger schmelzenden Elements. Nach dem Schweißvorgang wird der Rohling abgekühlt.

In einer besonders zweckmäßigen Ausgestaltung kann das Element A eine geringere Länge als das Element B aufweisen oder kann bezüglich der Längsachse der Elemente A,B gegenüber dem Element B versetzt angeordnet sein, derart, dass durch das überstehende Element B eine erfindungsgemäße Erhebung gebildet wird.

In einem weiteren Verfahrensabschnitt wird Material des ersten Elements A teilweise abgetragen, vorzugsweise mittels eines Fräswerkzeuges, derart, dass ein an einem Ende geschlossenen Hohlprofil erzeugt wird. Dabei hat es sich als vorteilhaft erwiesen, den Fräsvorgang so durchzuführen, dass an der Innenseite des Hohlprofils stirnseitig ein Materialansatz vom Element A erhalten bleibt, wodurch für das Thermoelement ein Kontaktelement gebildet wird. Vorzugsweise wird beim Fräsvorgang an den Seitenwänden auch ein geringer Materialteil vom Element B mit abgetragen um Toleranzen auszugleichen und um sicher zu stellen, dass in radialer Richtung des Rohlings alles Material vom Element A vom Fräswerkzeug erfasst wird. Weiterhin kann es vorteilhaft sein, auch Material aus der Schweißzone mit abzutragen.

Vorzugsweise ist der Materialansatz stiftartig ausgebildet und im Hohlprofil zentrisch angeordnet. Dadurch wird eine sichere und effektive Kontaktierung ermöglicht. In weiterer zweckmäßiger Ausgestaltung ist das Hohlprofil aus zwei zylinderförmigen Teilen gefertigt. Das hat den Vorteil, dass die kreisrunde Querschnittsfläche, welche die Auflagefläche für den Probenhalter darstellt, einerseits der Tigelbodenform entspricht und andererseits der Temperaturerfassungsbereich eine zum Tiegelboden korrespondierende kreisrunde Form aufweist.

Das Kontaktelement verhindert oder verringert in vorteilhafter Weise, dass sich durch den Wärmeeintrag beim Kontaktiervorgang das Thermoelement verzieht. Um aber dennoch ein eventuell aufgetretenen Verzug zu korrigieren, kann in einem abschließenden Arbeitsschritt, die als Auflagefläche für den Probenhalter dienende Oberfläche des Thermoelements plan gefräst werden. Weist wie bei der als vorteilshaft bereits genannten Ausführungsform das Element A eine geringere Länge als das Element B auf oder ist Element A bezüglich der Längsachse der Elemente A,B gegenüber dem Element B versetzt angeordnet so dass durch das überstehende Element B eine erfindungsgemäße Erhebung gebildet wird, ist ein Planfräsen lediglich für die als Auflagefläche für den Probenhalter dienende Oberfläche des Elements B von Bedeutung.

Für eine erfindungsgemäße Erhebung oder Vertiefung für die Auflagefläche kann aber beispielsweise auch im gefertigten Hohlprofil ein Unterdruck erzeugt werden um eine nach innen hin gerichtete Wölbung der Auflagefläche durch deren plastische Verformung zu erreichen. Statt der Unterdruckerzeugung oder zusätzlich kann auch mit einer auf der gegenüberliegenden Seite der Auflagefläche nach innen wirkender Kraft eine erfindungsgemäße Form der Auflagefläche erzielt werden.

Die mit der Erfindung erzielten Vorteile bestehen insbesondere darin, dass die erfindungsgemäße Haltevorrichtung gleichzeitig als Sensor dient und vergleichsweise einfach und kostengünstig hergestellt werden kann. Aufgrund der definiert angeordneten Erhöhungen oder Vertiefungen der Auflagefläche und/oder Tiegelböden, können mehrere Messvorgänge unter Verwendung mehrerer Tiegel ohne zeitaufwendige Rekalibrierung durchgeführt werden. Der Tiegel und die Temperaturmesseinrichtung sind so gestaltet, dass ohne zusätzliche Vorkehrungen des Anwenders der thermische Widerstand zwischen Tiegel und Temperaturerfassungsmittel von Messung zu Messung weitgehend derselbe ist. Die erfindungsgemäße Vorrichtung ist unter anderem anwendbar sowohl auf eine leistungskompensierende DSC als auch auf eine Wärmestrom-DSC. Weiterhin ist die erfindungsgemäße Vorrichtung für alle Thermoanalyseverfahren mit einem oder mehreren Tiegeln geeignet.

Ausführungsbeispiele der Erfindung werden in exemplarischer Weise mit Bezug auf die angehängten Zeichnungen beschrieben. Darin zeigen:
- Figur 1: schematisch im Querschnitt eine Temperaturmesseinrichtung mit einer planen Auflagefläche der Haltevorrichtung und einem Tiegel mit einem nach innen gewölbten Tiegelboden,
- Figur 2: schematisch einen Querschnitt der Temperaturmesseinrichtung,
- Figur 3: schematisch eine Tiegel-Sensor-Anordnung und einer Auflagefläche aufweisend eine Vertiefung mit einem nach innen gewölbten und im Querschnitt sinusförmig verlaufenden Tiegelboden,
- Figur 4: schematisch verschiedene Ausführungsbeispiele eines Thermoelements.

Gleiche Elemente sind in allen Figuren mit denselben Bezugszeichen versehen.

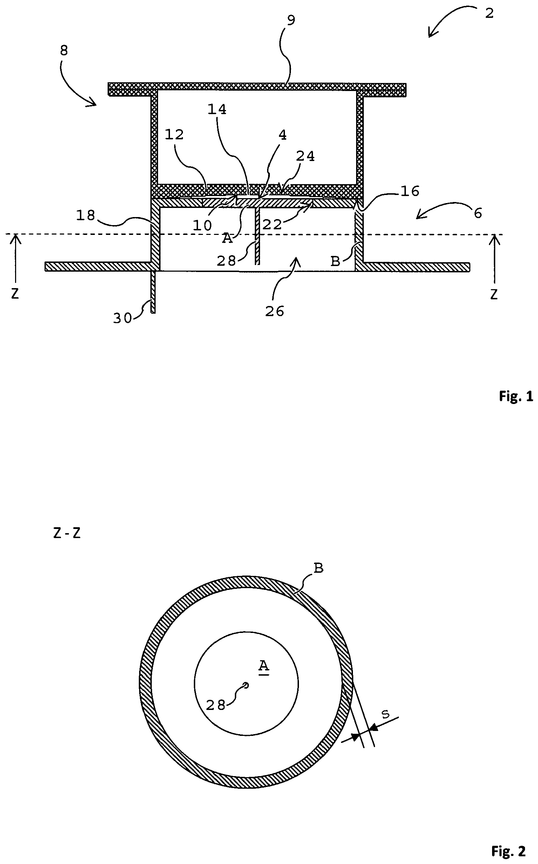

Figur 1 zeigt im Querschnitt eine Temperaturmesseinrichtung 2 für eine dynamische Differenzkalorimetrie mit einer planen Auflagefläche 4 der Haltevorrichtung 6 und einem metallischen Tiegel 8 als Probenhalter mit einer Vertiefung 10 in Form eines nach innen gewölbten Tiegelbodens 12. Die Haltevorrichtung 6 und der Tiegel 8 für Probe und Referenzseite sind identisch. Die Auflagefläche 4 von Proben- und Referenzseite sind thermisch und elektrisch miteinander verbunden.

Zwischen dem Tiegel 8 und der Auflagefläche 4 entsteht so ein Hohlraum 14, welcher im Querschnitt die Form einer plankonvexen Linse aufweist, wodurch der Tiegel 8 nur in einem Randbereich aufliegt und der Tiegelboden 12 über eine so gebildete Berührungsfläche 16 mit der Auflagefläche 4 der Haltevorrichtung 6 in Kontakt steht. Das Temperaturerfassungsmittel 18 ist in der Haltevorrichtung 6 integriert, derart, dass die Haltevorrichtung 6 im Bereich der Auflagefläche 4 als Thermoelement 18 ausgebildet ist. Eine Grenzfläche 22 des Thermoelements 18 stellt einen Temperaturerfassungsbereich dar, gebildet durch ein erstes und ein zweites metallisches Element A,B, welche miteinander in Kontakt stehen. Dieser Temperaturerfassungsbereich hat keinen direkten Kontakt mit dem Tiegelboden 12, da der Tiegel 8 so geformt ist, dass aufgrund einer Wölbung 24 im Tiegelboden 12 der Temperaturerfassungsbereich unterhalb dieser Wölbung 24 liegt. Der Einfluss von sonst gewöhnlich fertigungsbedingten Variationen in der Form des Tiegelbodens 12 auf den Wärmestrom verringert sich und die Reproduzierbarkeit steigt.

Der Tiegel 8 und die Haltevorrichtung 6 weisen einen kreisrunden Querschnitt auf. Der Tiegel 8 wird vor Beginn der Messung mit einer Abdeckung 9 versehen. Die Abdeckung 9 sorgt für ein homogenes Temperaturfeld. Die Haltevorrichtung 6 wurde aus einem zylinderförmigen Rohling mittels eines Fräswerkzeuges herausgearbeitet. Dazu wird ein als zylinderförmiges Vollprofil ausgebildetes metallisches Element A bei Raumtemperatur in ein zweites als zylinderförmiges Hohlprofil ausgebildetes metallisches Element B passgenau eingebracht. Element A weist dabei einen gegenüber Element B größeren Ausdehnungskoeffizienten auf. Als Thermoelementenpaarung Element A/Element B wurde Nickel-Chrom/Konstantan verwendet.

In einem ersten Arbeitsgang wird der Rohling auf ca. 1200°C erwärmt, wodurch die Elemente A,B unter Einfluss von Druck und Wärme miteinander verschweißt werden (Diffusionsschweißen). Nach dem Abkühlen des Rohlings wird mit Hilfe eines Fräswerkzeuges Material, im Wesentlichen vom Element A, abgetragen, indem das Fräswerkzeug in axialer Richtung zum Rohling bewegt wird. Das Fräswerkzeug ist dabei so dimensioniert und eingestellt, dass es bei einer zusätzlichen Bewegung entlang einer Kreisbahn um die Längsachse des Rohlings, eine Ausnehmung 26 entsprechend einer zu erreichenden Wandstärke s der Haltevorrichtung 6 erzeugt wird. Ein dabei stirnseitig gebildeter stiftartiger Materialansatz 28 dient als Kontaktelement. Um Fertigungstoleranzen auszugleichen und um sicher zu stellen, dass innerhalb der Ausnehmung 26 das Material vom Element A vollständig abgetragen wird, wird in radialer Richtung auch Material vom Element B abgetragen. Dazu weist Element B vor dem Fräsvorgang eine hier nicht dargestellte Wandstärke s' auf, die größer ist als die Wandstärke s der fertigen Haltevorrichtung 6.

Neben dem durch den Fräsvorgang erzeugten Kontaktelement 28, wird auch Element B mit einem Kontaktelement 30 versehen. Während eines Kontaktierungsvorgangs, beispielsweise durch Widerstandschweißen, wird verfahrensbedingt Wärme in die Kontaktelemente 28,30 eingebracht und teilweise auf die Haltevorrichtung 6 übertragen, was zu einem Verzug der Haltevorrichtung 6 führen kann. Insbesondere kann es zu einem Verzug der Auflagefläche 4 kommen. Dieser unerwünschte Effekt kann auch nicht wie bei dieser Ausführungsform ausgeschlossen werden, indem das Kontaktelement 28 und die durch das Element A gebildete Auflagefläche 4 einteilig ausgeführt und die erwärmte Kontaktstelle dadurch in vorteilhafter Weise von der Auflagefläche 4 beabstandet ist. Ein entstandener Verzug kann abschließend durch Planfräsen der Auflagefläche 4 korrigiert werden.

Bei einem Messvorgang am Beispiel einer Wärmestrom DSC wird eine hier nicht gezeigte Probe im Tiegel 8 positioniert und erwärmt. Die Genauigkeit der Messung des Wärmestroms ist dabei abhängig von der Reproduzierbarkeit der Einzelmessung. Dazu sollte der thermische Gesamtwiderstand zwischen Probe und Referenz entlang des Wärmestrompfades bei aufeinanderfolgenden Messungen konstant bleiben. Erfindungsgemäß und am Beispiel der hier gezeigten Ausführungsform, wird das dadurch erreicht, dass der Probenhalter 8 eine Berührungspunkte 16 bildende Vertiefung 10 in Form einer Wölbung 24 aufweist, wobei die Berührungspunkte 16 eine der Auflagefläche 4 zugeordnete relevante Wärmestromzone definieren. Im Endbereich dieser Wärmestromzone befindet sich der Temperaturerfassungsbereich der Haltevorrichtung 6.

Über den durch die Wölbung 24 im Tiegelboden 12 gebildeten umfänglich verlaufenden Kantenbereich, steht der Tiegel 8 stabil auf der Auflagefläche 4. Theoretisch steht damit der Tiegelboden 12 über die Kantenfläche mit der Auflagefläche 4 in Kontakt. Tatsächlich aber steht der Tiegelboden 12 über eine Vielzahl von Berührungspunkten 16 mit der Auflagefläche 4 in Kontakt, welche über die gesamte Kantenfläche verteilt sind, sich aber in einen fest definierten Bereich befinden. Dieser Bereich grenzt die Wärmestromzone der Auflagefläche 4 nach außen hin ab. In diesem Bereich findet aber auch der wesentliche Teil der Wärmeübertragung zwischen Tiegel 8 und Auflagefläche 4 statt. Die Höhe des Hohlraums 14 zwischen Tiegelboden 12 und Auflagefläche 4 kann innerhalb geringer Fertigungstoleranzen variieren. Für die Erfindung wesentlich bei diesem Ausführungsbeispiel ist lediglich, dass ein Hohlraum 14 vorhanden ist und sich die Fläche 16 des berührenden Bereichs trotz unterschiedlicher Wölbung 24 nicht ändert.

Der Hohlraum 14 zwischen dem Tiegelboden 12 und der Auflagefläche 4 ist an seiner höchsten Stelle, in der Nähe des Mittelpunktes der kreisförmigen Auflagefläche, maximal nur wenige hundertstel Millimeter hoch. Der Wärmeaustausch durch den Hohlraum 14 erfolgt daher im Wesentlichen über die Wärmeleitung durch das Gas, das sich im Hohlraum 14 befindet. Aufgrund der geringen Höhe des Hohlraums 14 spielt Konvektion nur eine untergeordnete Rolle. Vorteilhaft ist auch, dass die Gasmoleküle im Hohlraum 14 eingeschlossen sind und dadurch die Wärmeverluste an den Außenbereich, die dann auch durch Konvektion möglich sind, minimiert werden. Der Hohlraum 14 kann auch nur als nominell und nicht als tatsächlich abgeschlossener Hohlraum 14 angesehen werden, da durch die Rauigkeit der beteiligten Oberflächen von einem zumindest geringen Gasaustausch zwischen Hohlraum 14 und Atmosphäre ausgegangen werden kann. Um zu verhindern, dass es in einem Ausnahmefall, bei der Aufheizung zu stoßweisen Druckabbau und bei Abkühlung zur Ausbildung eines Unterdrucks im Hohlraum 14 kommen kann, können beispielsweise hier nicht dargestellte Nuten mit einer geringen Tiefe von wenigen hundertstel Millimeter in die Auflagefläche 4 oder den Tiegelboden 12 eingebracht werden, durch die dann ein Druckausgleich erfolgen kann. Eine weitere Möglichkeit wäre, den Tiegelboden 12, statt der durchgängigen kreisförmigen Berührungsfläche 16, entlang der Kreislinie mit punktförmigen Erhebungen zu versehen.

Figur 2 zeigt einen Querschnitt Z-Z durch die in Figur 1 dargestellte Haltevorrichtung 6. Die mantelförmige Wandstärke s entspricht der Wandstärke nach dem Fräsvorgang, welche geringer ist, als eine ursprüngliche Wandstärke s' des Rohlings. Die das Thermoelement 18 bildenden zwei metallischen Elemente A,B sind durch Diffusionsschweißen miteinander verbunden, wobei die Kontaktlinie, zusammen mit der Wandstärke der Auflagefläche 4, den Temperaturerfassungsbereich definieren. Mittig an der Unterseite der Auflagefläche 4 angeordnet, befindet sich das Kontaktelement 28.

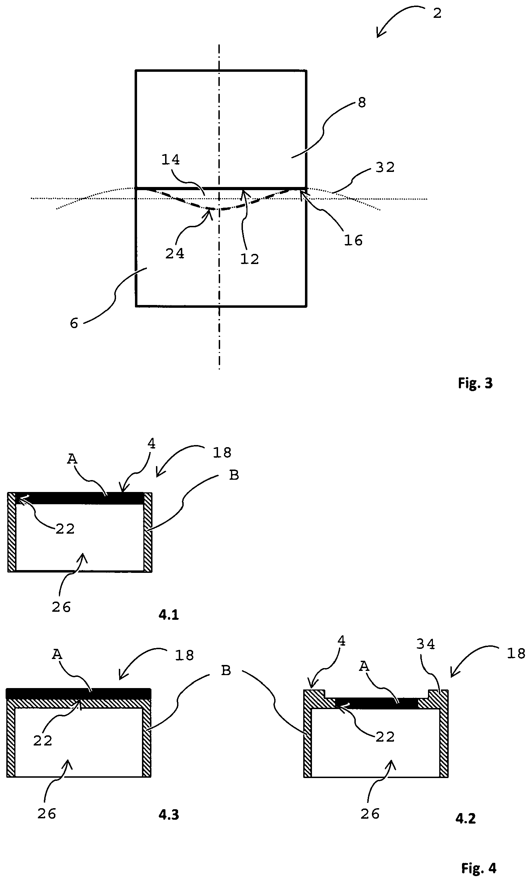

Eine schematisch stark vereinfacht dargestellte Anordnung mit einer Haltevorrichtung 6 und einem Tiegel 8 zeigt Figur 3. Hier ist beispielhaft die Auflagefläche 4 der Haltevorrichtung 6 nach innen gewölbt und weist einen sinusförmigen Verlauf 32 auf. Der Hohlraum 14 zwischen Auflagefläche 4 und Tiegelboden 12 entspricht näherungsweise der Form einer Plankonvexlinse. Näherungsweise bedeutet, dass die Profile der berührenden Flächen nicht nur Kreisbögen sondern auch durch Polynome beliebiger Ordnung oder trigonometrische Funktionen wie eben Sinus oder auch Kosinus angenähert werden können.

Die Figuren 4.1 bis 4.3 zeigen im Querschnitt verschiedene Ausführungsformen einer Haltevorrichtung 6. Die mit 4.1 und 4.3 gekennzeichneten Ausführungsformen weisen eine ebene Auflagefläche 4 auf, so dass, um zur erfindungsgemäßen Vorrichtung zu gelangen, der Tiegelboden 12 mit Berührungspunkte 16 bildende Erhebungen oder Vertiefungen 10 zu versehen ist.

Nachteilig bei der Ausführungsform 4.3 gegenüber 4.1 ist der unterhalb der als Auflagefläche 4 dienenden Trägerplatte gebildete Temperaturerfassungsbereich des Thermoelements 18. Ein derartiger Aufbau kann sich negativ auf das Messergebnis auswirken.

Die unter 4.2 gezeigte Haltevorrichtung 6 stellt eine gegenüber der Ausführungsform 4.1 modifizierte Haltevorrichtung 6 dar. Die Auflagefläche 4 ist in einem Randbereich mit einer Berührungspunkte 16 bildenden Erhebung 34 versehen, welche eine die Auflagefläche 4 umlaufende geschlossene Form aufweist.

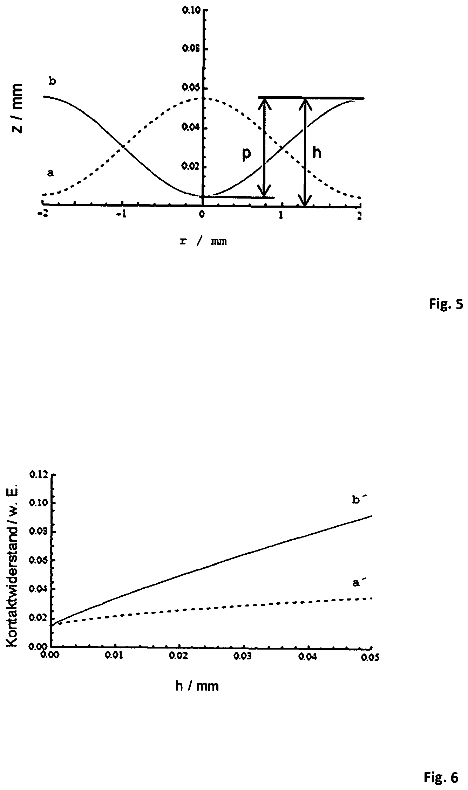

In Figur 5 zeigt die Kurve a das Profil des Tiegelbodens 12, wobei z den Abstand des Tiegelbodens 12 von der Auflagefläche 4 in Abhängigkeit von r, dem Abstand zum Mittelpunkt der Auflagefläche 4 darstellt. Der Radius des Tiegelbodens 12 beträgt 2 mm. Profil b zeigt dagegen einen Tiegelboden 12, der die Auflagefläche 4 des Thermoelements 18 punktförmig in der Mitte der Auflagefläche 4 berührt. Mit p ist die Profilhöhe und mit h ist der maximale Abstand zwischen Tiegelboden 12 und Auflagefläche 4 in der Abbildung bezeichnet, der in einem Bereich weniger hundertstel Millimeter liegt. Beide Kurven a,b zeigen einen minimalen Wert von 5 µm (mittlere Rauigkeit). Dadurch wird für die mit den dargestellten Profilen a und b durchgeführten Berechnung des Kontaktwiderstandes zwischen Auflagefläche und Tiegel 8 berücksichtigt, dass eine gewisse Rauigkeit für die berührenden Flächen vorliegt.

Figur 6 zeigt mit Kurve a' das Ergebnis der Berechnung des durch die gesamte Gasschicht gegebenen Kontaktwiderstands zwischen Auflagefläche 4 und Tiegel 8 in Abhängigkeit vom maximalen Abstand h für das in Figur 5 angenommene Profil a. Wie in der Darstellung gezeigt, variiert der Kontaktwiderstand kaum mit dem maximalen Abstand h.

Im Gegensatz dazu ist bei Kurve b' eine starke Abhängigkeit des Kontaktwiderstandes von h zu erkennen. Kurve b' wurde auf Grundlage des Profils b in Figur 5 berechnet. Der maximale Abstand liegt hier in einem Bereich weniger hundertstel Millimeter mit p=h-5 pm. Zwar ist der thermische Widerstand im Fall der beschriebenen Wölbung 24 gering höher als im Fall eines ideal ebenen Tiegelbodens, doch die mit der Wölbung 24 verbundene Verringerung des Messsignals, welche in einem vergleichsweise sehr geringem Prozentbereich liegt, ist vernachlässigbar gegenüber der Verbesserung der Reproduzierbarkeit.

Verfahren, Vorrichtung und Probenhalter sind spezifisch auf eine verbesserte Reproduzierbarkeit von Messergebnissen ausgerichtet, mit der der Einfluss von Abweichungen in der Formung des Tiegelbodens 12 auf den Wärmestrom deutlich verringert wird. Erreicht wird das durch Erhebungen 34 und/oder Vertiefungen 10 im Kontaktbereich zwischen dem Tiegelboden 12 und der Auflagefläche 4 der Haltevorrichtung 6, welche sich an bestimmten Stellen innerhalb des Kontaktbereichs befinden.

### Bezugszeichenliste

- 2: Temperaturmesseinrichtung
- 4: Auflagefläche
- 6: Haltevorrichtung
- 8: Tiegel
- 9: Abdeckung
- 10: Vertiefung
- 12: Tiegelboden
- 14: Hohlraum
- 16: Berührungspunkte/-fläche
- 18: Thermoelement
- 22: Grenzfläche
- 24: Wölbung
- 26: Ausnehmung
- 28: Kontaktelement Element A
- 30: Kontaktelement Element B
- 32: Sinusförmiger Verlauf
- 34: Erhebung
- A: Element A
- B: Element B
- s: Wandstärke der Haltevorrichtung

## Patentansprüche

1. Thermoanalysevorrichtung aufweisend einen Probenhalter (8) und eine Haltevorrichtung (6) mit einer Auflagefläche (4) für den Probenhalter (8), welcher mindestens ein Temperaturerfassungsmittel (18) zugeordnet ist, wobei die Auflagefläche (4) und/oder der Probenhalter (8) Berührungspunkte (16) bildende Erhebungen (34) oder Vertiefungen (10) aufweisen, die eine der Auflagefläche (4) zugeordnete relevante Wärmestromzone definieren, und wobei ein Temperaturerfassungsbereich des Temperaturerfassungsmittels (18) innerhalb der relevanten Wärmestromzone angeordnet ist,
**dadurch gekennzeichnet, dass** die Auflagefläche (4) selbst als das Temperaturerfassungsmittel (18) ausgebildet ist, wobei das Temperaturerfassungsmittel (18) als Thermoelement umfassend zwei Elemente (A, B) aus verschiedenen Metallen ausgebildet ist und eine Grenzfläche der zwei Elemente (A, B) den Temperaturerfassungsbereich bildet.

2. Thermoanalysevorrichtung nach Anspruch 1, **dadurch gekennzeichnet, dass** das Temperaturerfassungsmittel (18) eine zu den Erhebungen (34) oder Vertiefungen (10) korrespondierende Kontaktform aufweist.

3. Thermoanalysevorrichtung nach Anspruch 1 oder 2, **dadurch gekennzeichnet, dass** der Temperaturerfassungsbereich im Wesentlichen zentrisch zur Auflagefläche (4) verläuft.

4. Thermoanalysevorrichtung nach Anspruch 1 bis 3, **dadurch gekennzeichnet, dass** die Berührungspunkte (16) in einem Randbereich der Auflagefläche (4) liegen.

5. Thermoanalysevorrichtung nach Anspruch 1 bis 4, **dadurch gekennzeichnet, dass** der Probenhalter als Tiegel (8) ausgebildet ist.

6. Thermoanalysevorrichtung nach Anspruch 5, **dadurch gekennzeichnet, dass** zwischen dem Tiegelboden (12) und der Auflagefläche (4) ein Hohlraum (14) ausgebildet ist.

7. Thermoanalysevorrichtung nach Anspruch 5 oder 6, **dadurch gekennzeichnet, dass** der Hohlraum (14) mittels einer Wölbung (24) des Tiegelbodens (12) und/oder der Auflagefläche (4) gebildet ist.

8. Thermoanalysevorrichtung nach Anspruch 5 bis 7, **dadurch gekennzeichnet, dass** der Tiegelboden (12) an vordefinierten Stellen mit Erhebungen (34) und/oder Vertiefungen (10) versehen ist, welche in einem radial äußeren Bereich des Tiegelbodens Berührungspunkte (16) für eine Wärmeübertragung bilden.

9. Thermoanalysevorrichtung nach Anspruch 5 bis 8, **dadurch gekennzeichnet, dass** der Tiegelboden (12) eine nach innen hin gerichtete Wölbung (24) aufweist.

10. Thermoanalytisches Messverfahren mit einer Vorrichtung aufweisend einen Probenhalter (8) und eine Haltevorrichtung (6) mit einer Auflagefläche (4) für den Probenhalter (8), welcher mindestens ein Temperaturerfassungsmittel (18) zugeordnet ist, wobei ein zu erfassender Wärmestrom im Wesentlichen über definiert angeordnete Berührungspunkte (16) zwischen Auflagefläche (4) und Probenhalter (8) und über eine durch die Berührungspunkte definierte Wärmestromzone der Auflagefläche (4) zu einem innerhalb der Wärmestromzone angeordneten Temperaturerfassungsbereich des Temperaturerfassungsmittels (18) geleitet wird,
**dadurch gekennzeichnet, dass** die Auflagefläche (4) selbst als das Temperaturerfassungsmittel (18) ausgebildet ist, wobei das Temperaturerfassungsmittel (18) als Thermoelement umfassend zwei Elemente (A, B) aus verschiedenen Metallen ausgebildet ist und eine Grenzfläche der zwei Elemente (A, B) den Temperaturerfassungsbereich bildet.

11. Thermoanalytisches Messverfahren nach Anspruch 10, **dadurch gekennzeichnet, dass** die Wärmestromerfassung unterhalb eines durch die Auflagefläche (4) der Haltevorrichtung (6) und/oder den Probenhalter (8) gebildeten Hohlraumes (14) erfolgt.

12. Herstellungsverfahren für ein als Thermoelement (18) ausgebildetes Temperaturerfassungsmittel (18) für eine Thermoanalysevorrichtung nach Anspruch 1, umfassend mindestens zwei Elemente aus unterschiedlichen Metallen, **dadurch gekennzeichnet, dass** ein erstes metallisches Element A, mit einem gegenüber einem zweiten metallischen Element B größeren Ausdehnungskoeffizienten, passgenau in das als Hohlprofil ausgebildete zweite metallische Element B eingebracht wird und beide Elemente A,B in einem ersten Arbeitsgang erwärmt und anschließend in einem zweiten Arbeitsgang wieder abgekühlt werden.

13. Herstellungsverfahren für ein als Thermoelement (18) ausgebildetes Temperaturerfassungsmittel (18) nach Anspruch 12, **dadurch gekennzeichnet, dass** die Elemente A,B bis zu einer Temperatur erwärmt werden, welche nahe der Schmelztemperatur des niedriger schmelzenden Elements liegt.

14. Herstellungsverfahren für ein als Thermoelement (18) ausgebildetes Temperaturerfassungsmittel (18) nach Anspruch 12 oder 13, **dadurch gekennzeichnet, dass** in einem weiteren Verfahrensabschnitt Material des ersten Elements A teilweise abgetragen wird.

15. Herstellungsverfahren für ein als Thermoelement (18) ausgebildetes Temperaturerfassungsmittel (18) nach Anspruch 14, **dadurch gekennzeichnet, dass** an der Innenseite des Hohlprofils stirnseitig ein Materialansatz (28) vom Element A erhalten bleibt und wodurch für das Thermoelement (18) ein Kontaktelement (28) gebildet wird.

## Claims

1. A thermal analysis device comprising a sample holder (8) and a holding device (6) with a support surface (4) for the sample holder (8), to which at least one temperature detection means (18) is assigned, wherein the support surface (4) and/or the sample holder (8) comprise elevations (34) or depressions (10) forming contact points (16), which define a relevant heat flow zone assigned to the support surface (4), and wherein a temperature detection region of the temperature detection means (18) is arranged within the relevant heat flow zone,
**characterised in that** the support surface (4) itself is constituted as the temperature detection means (18), wherein the temperature detection means (18) is constituted as a thermocouple comprising two elements (A, B) made of different metals and an interface of the two elements (A, B) forms the temperature detection region.

2. The thermal analysis device according to claim 1, **characterised in that** the temperature detection means (18) comprises a contact form corresponding to the elevations (34) or depressions (10).

3. The thermal analysis device according to claim 1 or 2, **characterised in that** the temperature detection region runs essentially concentrically to the support surface (4) .

4. The thermal analysis device according to claim 1 to 3, **characterised in that** the contact points (16) lie in an edge region of the support surface (4).

5. The thermal analysis device according to claim 1 to 4, **characterised in that** the sample holder is constituted as a crucible (8).

6. The thermal analysis device according to claim 5, **characterised in that** a hollow space (14) is formed between the crucible base (12) and the support surface (4) .

7. The thermal analysis device according to claim 5 or 6, **characterised in that** the hollow space (14) is formed by means of a curvature (24) of the crucible base (12) and/or of the support surface (4).

8. The thermal analysis device according to claim 5 to 7, **characterised in that** the crucible base (12) is provided at predefined points with elevations (34) and/or depressions (10), which form contact points (16) for a heat transfer in a radial outer region of the crucible base.

9. The thermal analysis device according to claim 5 to 8, **characterised in that** the crucible base (12) has a curvature (24) directed inwards.

10. A thermal analysis measurement method with a device comprising a sample holder (8) and a holding device (6) with a support surface (4) for the sample holder (8), to which at least one temperature detection means (18) is assigned, wherein a heat flow to be detected is conducted essentially via contact points (16) arranged in a defined manner between the support surface (4) and the sample holder (8) and via a heat flow zone of the support surface (4) defined by the contact points to a temperature detection region of the temperature detection means (18) arranged within the heat flow zone,
**characterised in that** the support surface (4) itself is constituted as the temperature detection means (18), wherein the temperature detection means (18) is constituted as a thermocouple comprising two elements (A, B) made of different metals and an interface of the two elements (A, B) forms the temperature detection region.

11. The thermal analysis measurement method according to claim 10, **characterised in that** the heat flow detection takes place beneath a hollow space (14) formed by the support surface (4) of the holding device (6) and/or the sample holder (8).

12. A production process for a temperature detection means (18) constituted as a thermocouple (18) for a thermal analysis device according to claim 1, comprising at least two elements made of different metals, **characterised in that** a first metal element A, with an expansion coefficient greater than a second metal element B), is introduced with a precise fit into second metal element B constituted as a hollow profile and the two elements A, B are heated in a first operation and then cooled again in a second operation.

13. A production process for a temperature detection means (18) constituted as a thermocouple (18) according to claim 12, **characterised in that** elements A, B are heated to a temperature which lies close to the melting temperature of the lower-melting element.

14. A production process for a temperature detection means (18) constituted as a thermocouple (18) according to claim 12 or 13, **characterised in that** in a further process step material of first element A is partially removed.

15. A production process for a temperature detection means (18) constituted as a thermocouple (18) according to claim 14, **characterised in that** a material projection (28) of element A is retained at the inner side of the hollow profile on the front face and as a result a contact element (28) is formed for the thermocouple (18) .

## Revendications

1. Dispositif de thermo-analyse, comportant un porte-échantillon (8) et un dispositif de maintien (6) pourvu d'une surface d'appui (4) pour le porte-échantillon (8), à laquelle est associé au moins un moyen de détection de la température (18), la surface d'appui (4) et/ou le porte-échantillon (8) comportant des élévations (34) ou des creux (10) formant des points de contact (16), qui définissent une zone de flux thermique déterminante, associée à la surface d'appui (4) et une zone de détection de la température du moyen de détection de la température (18) étant placée à l'intérieur de la zone de flux thermique déterminante,
**caractérisé en ce que** la surface d'appui (4) proprement dite est conçue en tant que moyen de détection de la température (18), le moyen de détection de la température (18) étant conçu en tant que thermocouple comprenant deux éléments (A, B) en différents métaux et une surface limite des deux éléments (A, B) formant la zone de détection de la température.

2. Dispositif de thermo-analyse selon la revendication 1, **caractérisé en ce que** le moyen de détection de la température (18) comporte une forme de contact correspondant aux élévations (34) ou aux creux (10).

3. Dispositif de thermo-analyse selon la revendication 1 ou 2, **caractérisé en ce que** la zone de détection de la température s'écoule sensiblement de manière centrée par rapport à la surface d'appui (4).

4. Dispositif de thermo-analyse selon la revendication 1 à 3, **caractérisé en ce que** les points de contact (16) se situent dans une zone marginale de la surface d'appui (4).

5. Dispositif de thermo-analyse selon la revendication 1 à 4, **caractérisé en ce que** le porte-échantillon est conçu sous la forme d'un creuset (8).

6. Dispositif de thermo-analyse selon la revendication 5, **caractérisé en ce qu'**entre le fond du creuset (12) et la surface d'appui (4) est conçue une cavité (14).

7. Dispositif de thermo-analyse selon la revendication 5 ou 6, **caractérisé en ce que** la cavité (14) est formée au moyen d'une voûte (24) du fond du creuset (12) et/ou de la surface d'appui (4).

8. Dispositif de thermo-analyse selon la revendication 5 à 7, **caractérisé en ce que** le fond du creuset (12) est muni sur des endroits prédéfinis d'élévations (34) ou de creux (10), lesquel(le)s forment dans une zone extérieure radiale du fond du creuset des points de contact (16) pour un transfert thermique.

9. Dispositif de thermo-analyse selon la revendication 5 à 8, **caractérisé en ce que** le fond du creuset (12) comporte une voûte (24) dirigée vers l'intérieur.

10. Procédé de mesure thermo-analytique, pourvu d'un dispositif comportant un porte-échantillon (8) et d'un dispositif de maintien (6) pourvu d'une surface d'appui (4) pour le porte-échantillon (8), à laquelle est associé au moins un moyen de détection de la température (18), un flux thermique qui doit être détecté étant dirigé sensiblement par l'intermédiaire de points de contact (16) placés de manière définie entre la surface d'appui (4) et le porte-échantillon (8) et par l'intermédiaire d'une zone de flux thermique de la surface d'appui (4) définie par les points de contact vers une zone de détection de la température du moyen de détection de la température (18), placée à l'intérieur de la zone de flux thermique,
**caractérisé en ce que** la surface d'appui (4) proprement dite est conçue en tant que moyen de détection de la température (18), le moyen de détection de la température (18) étant conçu en tant que thermocouple comprenant deux éléments (A, B) en différents métaux et une surface limite des deux éléments (A, B) formant la zone de détection de la température.

11. Procédé de mesure thermo-analytique selon la revendication 10, **caractérisé en ce que** la détection du flux thermique s'effectue en-dessous d'une cavité (14) formée par la surface d'appui (4) du dispositif de maintien (6) et le porte-échantillon (8).

12. Procédé de fabrication d'un moyen de détection de la température (18), conçu sous la forme d'un thermocouple (18) pour un dispositif de thermo-analyse selon la revendication 1, comprenant au moins deux éléments en différents métaux, **caractérisé en ce qu'**on introduit de manière parfaitement ajustée un premier élément métallique A, disposant d'un coefficient de dilatation supérieur à celui d'un deuxième élément métallique B dans le deuxième élément métallique B, conçu sous la forme d'un profilé creux et on chauffe, puis on refroidit à nouveau dans une deuxième étape de travail les deux éléments A, B.

13. Procédé de fabrication d'un moyen de détection de la température (18), conçu sous la forme d'un thermocouple (18) selon la revendication 12, **caractérisé en ce qu'**on chauffe les éléments A, B jusqu'à une température qui est proche de la température de fusion de l'élément possédant la plus basse température de fusion.

14. Procédé de fabrication d'un moyen de détection de la température (18), conçu sous la forme d'un thermocouple (18) selon la revendication 12 ou 13, caractérisé en ce dans une partie supplémentaire du procédé, on enlève de la matière du premier élément A.

15. Procédé de fabrication d'un moyen de détection de la température (18), conçu sous la forme d'un thermocouple (18) selon la revendication 14, **caractérisé en ce que** sur la face interne du profilé creux, on préserve un embout de matière (28) de l'élément A et suite à quoi, on forme un élément de contact (28) pour le couple thermique (18).
